# FASCICULE DE BREVET EUROPEEN

(11) **EP 3 207 801 B1**
(45) Date de publication et mention de la délivrance du brevet: **02.10.2019**
(21) Numéro de dépôt: 16197001.7
(22) Date de dépôt: 03.11.2016
(51) Int. Cl.: A21B 3/04, A47J 27/16, F22B 1/28, F24C 15/32

(54) **FOUR COMPRENANT UN DISPOSITIF DE GÉNÉRATION DE VAPEUR, ET MÉTHODE DE CUISSON UTILISANT UN TEL FOUR**
OFEN UMFASSEND EINE DAMPFERZEUGUNGSVORRICHTUNG UND GARVERFAHREN, DAS EINEN SOLCHEN OFEN VERWENDET
OVEN COMPRISING A STEAM-GENERATING DEVICE AND COOKING METHOD USING SUCH A OVEN

(30) Priorité: 17.02.2016 EP 16290034
(43) Date de publication de la demande: 23.08.2017
(73) Titulaire: SEBP PAVAILLER, 26802 Portes-les-Valence (FR)
(72) Inventeur: TOULOUSE, Bruno, 26600 Tain l'Hermitage (FR)
(74) Mandataire: Kessler, Marc

(56) Documents cités:
- WO-A1-2009/141995
- DE-C1- 4 403 386
- ES-A1- 2 308 952
- KR-A- 20130 042 977
- US-A1- 2005 072 382

## Description

### Objet de l'invention

La présente invention se rapporte au domaine des fours de cuisson, notamment pour la cuisson de produits alimentaires, utilisant de la vapeur comme complément à la cuisson.

### Etat de la technique

L'emploi de dispositifs de génération de vapeur d'eau est répandu dans de nombreux domaines. Par exemple, le document ES 2 308 952 décrit un fer à repasser comprenant un élément de chauffage agencé pour chauffer la semelle du fer à repasser et une chambre de vaporisation sous le contrôle d'un thermostat, le fer à repasser comprenant en outre une soupape de vapeur associé à un actionneur pour permettre ou empêcher de délivrer un flux de vapeur provenant de la chambre de vaporisation au travers des trous de la semelle.

Pour ce qui concerne un four, traditionnellement, ce dernier comprend d'une part une cavité destinée à recevoir des produits, ou des objets, qui devront subir un traitement thermique, et d'autre part des moyens de production de chaleur qui permettront la cuisson des produits, des moyens qui mettent en oeuvre soit la combustion d'un combustible, tel le gaz, le fioul ou le bois, soit une résistance électrique, ou bien le rayonnement solaire pour ce qui concerne les fours solaires.

L'utilisation de vapeur d'eau dans l'enceinte d'un four en complément de la cuisson, en particulier d'aliments, est bien connue, notamment pour accélérer la cuisson des aliments, tout en empêchant qu'ils ne se dessèchent, mais également pour en augmenter ainsi la qualité croustillante et l'aspect, notamment la brillance. En effet, pour la cuisson par exemple du pain, l'obtention d'un bon développement et d'un bel aspect de la croûte nécessite une humidification de la surface de l'aliment en début de cuisson.

Pour ce qui concerne les fours traditionnels, il a été proposé d'injecter de l'eau sur les éléments chauffants du four afin de générer et fournir de la vapeur dans le four, comme cela a été décrit par exemple dans le document FR2410225 pour un four de boulangerie à chariot. Toutefois, cette solution présente de nombreux inconvénients. Tout d'abord, afin de pouvoir produire efficacement de la vapeur d'eau, il est nécessaire d'attendre que les éléments chauffants du four atteignent une température élevée pour vaporiser l'eau. Par ailleurs, la vaporisation de l'eau refroidit les éléments chauffants, induisant des variations de température dans l'enceinte de cuisson et nécessitant un apport d'énergie important pour maintenir les éléments chauffants à bonne température, et donc le four à bonne température. De plus, cette solution présente l'inconvénient d'entartrer rapidement les éléments chauffants du four. D'autre part, une partie de l'eau injectée depuis l'extérieur de l'enceinte du four peut ne pas atteindre le dispositif de chauffe et ruisselle alors contre les parois périphériques de l'enceinte du four, nécessitant des moyens d'évacuation de cette eau résiduelle. De plus, de telles solutions présentent l'inconvénient de ne pas permettre une génération contrôlée de la vapeur d'eau, une quantité de vapeur qui est pourtant fonction du produit à cuire.

Une autre solution consiste à injecter de la vapeur directement dans la cavité du four traditionnel, ou du four de cuisson à la vapeur, à l'aide de générateurs de vapeur ou de buée, séparés et placés à l'extérieur de la chambre de cuisson. De tels générateurs de vapeur comprennent une alimentation en eau, une enceinte recevant cette eau, et des moyens de chauffage de cette eau dans ladite enceinte afin de produire de la vapeur. Ces générateurs de buée fonctionnent en continu, à la manière d'une bouilloire ou d'un autocuiseur, et sont par conséquent également très énergivores.

Ainsi, il a été proposé différentes solutions pour tenter de rendre les générateurs de buée pour fours de cuisson plus économes en énergie.

Par exemple, le document EP1617148 décrit l'emploi d'un générateur de buée disposé dans l'enceinte du four et en communication de fluide avec un réservoir externe d'eau.

Le document US1086034 décrit un four de cuisson comprenant, sur une de ces parois extérieures, un réservoir de vapeur d'eau, couplé à générateur de vapeur comprenant un premier serpentin, dans lequel la vapeur d'eau est générée, et qui est en communication de fluide avec un second serpentin dans lequel l'eau à vaporiser est chauffée, les deux serpentins étant sous pression d'eau et étant exposés à la chaleur dégagée par la paroi du four sur laquelle ils sont disposés. La vapeur d'eau ainsi produite peut être soit introduite dans le four, soit être utilisée à l'extérieur du four, comme peut l'être d'ailleurs l'eau chaude produite par le second serpentin. Néanmoins, cette solution présente l'inconvénient d'être énergivore et de fournir une production d'eau chaude et de vapeur en continu, très peu contrôlée, une production qui va au-delà des besoins en vapeur du four lors de la cuisson du pain. Ainsi, l'eau chaude et la vapeur d'eau excédentaires doivent être fréquemment évacuées d'une manière ou d'une autre.

De même, le document DE4403386 décrit un four comprenant un générateur de vapeur et dont l'enceinte de cuisson comprend des moyens d'évacuation des condensats qui passent au travers d'un échangeur de chaleur permettant de préchauffer l'eau avant qu'elle ne soit amenée dans le générateur de vapeur, et ce, afin de réduire les besoins en énergie du générateur de vapeur. De même, le document US2005/0072382 divulgue également un échangeur de chaleur, alimenté par le trop-plein de l'eau contenue dans le générateur de vapeur.

Par ailleurs, et pour un dispositif de décongélation, et non pas pour un four de cuisson, le document WO2009/141995 propose également l'emploi de vapeur, générée en continu, à partir d'une eau préalablement chauffée dans une enceinte de préchauffage avant son injection dans le générateur de buée.

Toutefois, ces solutions présentent l'inconvénient d'être des systèmes de génération de vapeur en continu et restent encore malgré tout trop peu économes en énergie et en eau.

### Buts de l'invention

La présente invention vise à fournir un four comprenant un dispositif de génération de vapeur, et une méthode de cuisson dans un tel four, qui ne présentent pas les inconvénients de l'état de la technique.

La présente invention vise à fournir une alternative aux solutions de l'état de la technique existantes.

La présente invention vise à fournir un four comprenant un dispositif de génération de vapeur, et une méthode de cuisson, ayant un rendement amélioré de production de vapeur d'un liquide, en particulier de vapeur d'eau, dans l'atmosphère intérieure d'une cavité de four, tout en étant économe en liquide, en particulier en eau et en énergie.

La présente invention vise à fournir une solution pour la génération contrôlée d'une quantité importante de vapeur, dans un laps de temps court, et de façon répétitive, tout en étant économe en énergie.

### Résumé de l'invention

La présente invention porte sur un four comprenant au moins un dispositif de génération de vapeur d'un liquide comprenant un réservoir, apte à recevoir un liquide à vaporiser, en communication de fluide avec une source de liquide, le réservoir se trouvant sous pression atmosphérique, ou sous pression de liquide et demeurant à température ambiante, des moyens de chauffage du liquide dans le réservoir pour amener et/ou maintenir le liquide à une température supérieure à la température ambiante à laquelle demeure le réservoir et inférieure à la température de vaporisation du liquide, des moyens contrôlés d'acheminement du liquide chaud du réservoir dans une enceinte, ces moyens ne délivrant que la quantité nécessaire de liquide à la génération dans l'enceinte d'une quantité déterminée de vapeur de liquide, des moyens de contrôle des moyens d'acheminement contrôlant l'acheminement de la quantité nécessaire de liquide, une enceinte de vaporisation, en communication de fluide avec le réservoir et se trouvant sous pression atmosphérique, qui, en fonctionnement, ne contient transitoirement que la quantité nécessaire de liquide, des moyens de vaporisation de la quantité nécessaire du liquide dans l'enceinte générant instantanément de vapeur du liquide, des moyens de distribution, à partir de l'enceinte, de la quantité déterminée de vapeur générée.

Selon des modes de réalisation de l'invention, le four de l'invention peut comprendre les caractéristiques suivantes :
- les moyens contrôlés d'acheminement du liquide du réservoir dans l'enceinte du dispositif de génération de vapeur comprennent au moins un dispositif de transfert qui est une électrovanne pilotée,
- le dispositif de génération de vapeur comprend en outre des moyens de contrôle des moyens de chauffage du liquide dans le réservoir et/ou des moyens de vaporisation du liquide dans l'enceinte et/ou des moyens de distribution de la vapeur générée,
- le dispositif de génération de vapeur comprend en outre des moyens contrôlés d'acheminement du liquide de la source de liquide dans le réservoir pour un transfert contrôlé du liquide dans le réservoir,
- le liquide est de l'eau,

Dans un mode de réalisation préféré du four selon l'invention, le four comprend des moyens de contrôle et/ou des moyens de commande et/ou des moyens de programmation de la cuisson des produits à cuire, couplés et/ou interagissant et/ou contrôlant les moyens contrôlés d'acheminement du liquide du réservoir vers l'enceinte et/ou les moyens de chauffage du liquide dans le réservoir et/ou les moyens de vaporisation du liquide dans l'enceinte et/ou éventuellement les moyens d'acheminement du liquide depuis la source de liquide vers le réservoir.

Dans un mode de réalisation préféré du four selon l'invention, le four est un four de boulangerie.

La présente invention porte également sur une méthode de cuisson d'au moins un produit alimentaire dans un four de cuisson comprenant une cavité de cuisson, la méthode comprenant les étapes de déterminer une quantité de vapeur d'un liquide à générer, d'amener le liquide à partir d'une source de liquide dans un réservoir d'un dispositif de génération de vapeur de liquide, le réservoir se trouvant, en fonctionnement, sous pression atmosphérique ou sous pression de liquide et demeurant à température ambiante, de chauffer et/ou de maintenir le liquide dans le réservoir à une température supérieure à la température ambiante à laquelle demeure le réservoir et inférieure à la température de vaporisation du liquide, d'amener, de façon contrôlée, une quantité de liquide chaud nécessaire à la génération d'une quantité déterminée de vapeur de liquide, du réservoir dans une enceinte de vaporisation du dispositif de génération de vapeur, l'enceinte étant, en fonctionnement, sous pression atmosphérique, et ne contenant pas préalablement de liquide, de générer, instantanément, sous pression atmosphérique, dans l'enceinte la quantité déterminée de vapeur à partir de la quantité nécessaire de liquide, de distribuer la quantité déterminée de vapeur de liquide générée à la cavité de cuisson lors de la cuisson du produit alimentaire.

Selon des modes préférés de l'invention, la méthode de cuisson selon l'invention comprend au moins une, ou une combinaison quelconque appropriée, des caractéristiques suivantes :
- la méthode comprend une étape de chauffage du liquide avant son acheminement dans le réservoir à une température supérieure à la température ambiante à laquelle demeure le réservoir,
- la méthode dans laquelle étape de détermination de la quantité de vapeur de liquide à générer est fonction de la nature du produit à traiter thermiquement dans le four auquel le dispositif de génération de vapeur est couplé.

Selon des modes préférés de l'invention, la méthode de cuisson d'au moins un produit alimentaire dans un four de cuisson selon l'invention comprend au moins une, ou une combinaison quelconque appropriée, des caractéristiques suivantes :
- la méthode comprend une étape de détermination de la nature du produit alimentaire à cuire et/ou du cycle ou programme de cuisson,
- la méthode comprend une étape de contrôle et/ou de commande et/ou d'interaction, en fonction de la détermination de la nature du produit alimentaire à cuire et/ou du cycle ou programme de cuisson, de l'acheminement du liquide vers le réservoir et/ou de l'acheminement du liquide du réservoir dans l'enceinte et/ou du chauffage du liquide dans le réservoir et/ou de la vaporisation du liquide dans l'enceinte et/ou du chauffage du liquide durant son acheminement dans l'enceinte et/ou éventuellement durant son acheminement dans le réservoir.

### Brève description des figures

La figure 1 est une représentation schématique du dispositif de génération de vapeur compris dans le four selon l'invention.
La figure 2 est une représentation schématique du dispositif de génération de vapeur compris dans le four selon l'invention, en fonctionnement, et dans lequel le réservoir comprend du liquide.
La figure 3 est une représentation schématique du dispositif de génération de vapeur compris dans le four selon l'invention, en fonctionnement, et dans lequel les moyens contrôlés d'acheminement du liquide du réservoir vers l'enceinte ne délivrent que la quantité nécessaire de liquide à la génération d'une quantité déterminée de vapeur.
La figure 4 est une représentation schématique du dispositif de génération de vapeur compris dans le four selon l'invention, en fonctionnement, et dans lequel la quantité déterminée de vapeur est générée instantanément.

### Description détaillée de l'invention

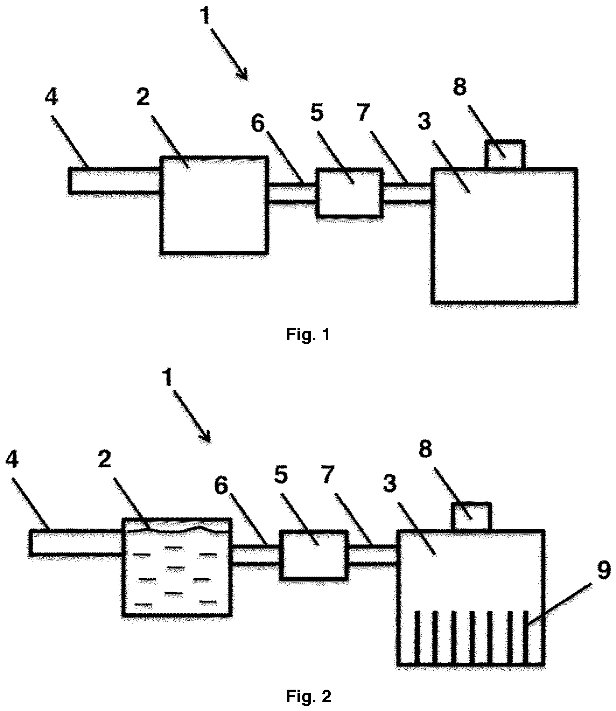

Le dispositif 1 de génération de vapeur équipant le four selon l'invention (figure 1) comprend des moyens d'acheminement d'un liquide dans un réservoir 2 à partir d'une source de liquide, un réservoir 2 dans lequel le liquide est chauffé. Il comprend en outre une enceinte 3, distincte du réservoir 2, dans laquelle est générée, de façon contrôlée, de la vapeur de liquide, le réservoir 2 et l'enceinte 3 étant en communication de fluide, et des moyens de distribution de la vapeur produite.

Le liquide dont il est question, dans la présente invention, est tous liquides adéquats pour, ou accompagnant, le traitement thermique d'un ou d'une multitude de produits devant subir un traitement thermique. Pour un mode de réalisation de l'invention ayant trait à la cuisson de produits alimentaires, le liquide est de préférence de l'eau, mais il peut également s'agir d'eau, ou un mélange d'huile et d'eau, comprenant un ou plusieurs additifs améliorant la cuisson, ou un ou plusieurs pigments.

Le réservoir 2 a toute forme adéquate et est fait de tous matériaux, ou assemblage(s) de matériaux, adéquats. Il est destiné, et apte, à recevoir, et à stocker, du liquide avant son acheminement dans l'enceinte 3. Il comprend, ou est en communication avec, tous moyens adéquats d'acheminement du liquide dans ledit réservoir 2 à partir de la source de liquide. Ces moyens comprennent, de préférence, une ou plusieurs ouvertures pratiquées dans le réservoir 2 et au moins une canalisation 4, en communication de fluide avec la source de liquide. Avantageusement, ces moyens permettent le transfert contrôlé du liquide de la source de liquide vers le réservoir 2, de préférence selon différents paramètres modifiables ou réglables qui sont fonction de la quantité de vapeur à produire. Cela présente l'avantage d'amener une quantité de liquide déterminée dans le réservoir 2 pour la génération d'une quantité définie de vapeur de liquide. De préférence, ce transfert contrôlé de liquide se fait de façon automatique ou piloté par l'utilisateur du dispositif de génération de vapeur 1 ou du four comprenant dispositif de génération de vapeur 1. De préférence, ce transfert automatique ou piloté se fait via des moyens de programmation du dispositif de génération de vapeur 1, ou du four comprenant ledit dispositif, comprenant une interface utilisateur, comme par exemple un régulateur ou un écran tactile.

Le transfert de liquide peut être fait en une seule fois ou en plusieurs fois, espacées par des laps de temps programmables et variables, par exemple une centaine de millilitres durant quelques secondes. Le transfert séquentiel de liquide dans le réservoir 2 présente l'avantage de réduire les chocs thermiques.

De préférence, les moyens d'acheminement du liquide dans le réservoir 2 comprennent une pompe ou une valve. Avantageusement, il s'agit d'une vanne, encore plus avantageusement il s'agit d'une électrovanne, de préférence pilotée.

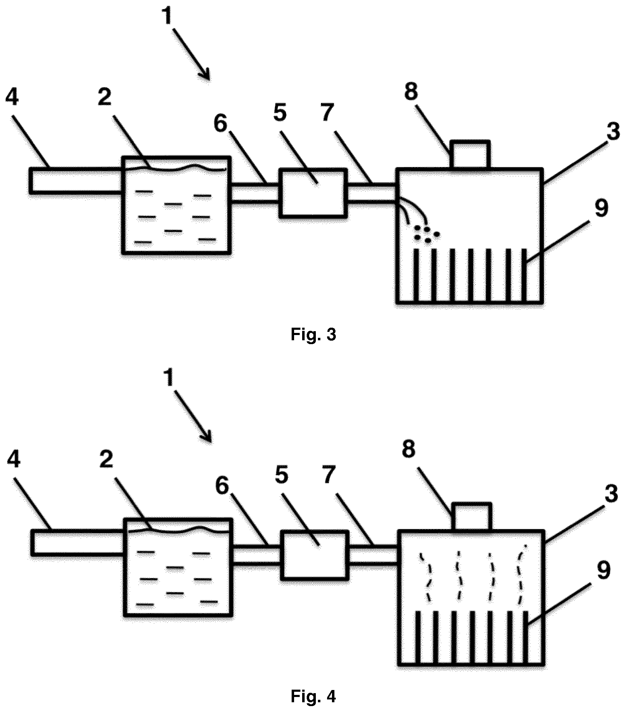

En fonctionnement, le réservoir 2 comprend principalement, ou majoritairement, du liquide, sans pour autant exclure la présence d'une faible proportion de vapeur de liquide (figures 2 à 4).

Dans un mode de réalisation particulier de l'invention, le réservoir 2, en particulier en fonctionnement, est sous pression atmosphérique, ou sensiblement sous pression atmosphérique. Cela présente l'avantage de nécessiter moins d'énergie pour chauffer, et maintenir chaud, le liquide qui se trouve dans le réservoir 2, en comparaison avec un réservoir 2 qui serait sous pression de liquide, par exemple, et pour ce qui concerne la génération de vapeur d'eau, en comparaison à une enceinte sous pression d'eau, qui serait en communication de fluide avec une alimentation en eau sanitaire, qui se trouve généralement sous une pression d'environ 3 bars (300 kPa).

Dans un autre mode de réalisation particulier de l'invention, le réservoir 2 est sous pression de liquide, de préférence à une pression régulée, avantageusement à une pression inférieure à la pression à laquelle se trouve le liquide provenant de la source de liquide. Par exemple, et pour ce qui concerne la génération de vapeur d'eau, le réservoir 2 se trouve à une pression régulée, par exemple via un réducteur de pression, à une pression inférieure d'environ 2 bars (inférieure de 200 kPa) à la pression du réseau d'eau. Cela permet d'assurer une injection précise de liquide, par exemple d'eau, en jouant sur le temps d'ouverture des moyens d'acheminement du liquide, par exemple de l'eau, dans le réservoir 2 et donc en jouant sur la différence de pressions entre le réservoir 2 et l'enceinte 3. L'utilisation d'une pression de liquide dans le réservoir 2 permet une injection rapide du liquide vers l'enceinte 3.

Dans ce mode de réalisation, le réservoir 2 est étanche afin de permettre sa mise sous pression et comprend éventuellement une soupape de sécurité.

De préférence, le liquide est acheminé depuis la source de liquide dans le réservoir 2, à une température inférieure, supérieure ou égale, à la température ambiante à laquelle se trouve le réservoir 2, ou à la température à laquelle le liquide est chauffé, ou maintenu, dans le réservoir 2.

Dans le mode de réalisation dans lequel le liquide est acheminé à une température supérieure à la température à laquelle se trouve le réservoir 2, de préférence supérieure à la température ambiante, les moyens d'acheminement du liquide dans le réservoir 2 sont, de préférence, isolés thermiquement ou sont thermostatés.

Dans le mode de réalisation selon l'invention dans lequel le liquide est de l'eau, la source de liquide, en amont du réservoir 2, est de préférence un circuit d'alimentation d'eau sanitaire, une installation de fourniture d'eau chaude sanitaire, ou tous réservoirs adéquats.

De préférence, les moyens d'acheminement du liquide dans le réservoir 2 comprennent en outre un ou plusieurs filtres afin d'éliminer les impuretés éventuellement présentent dans le liquide.

De préférence, le réservoir 2 comprend en outre un clapet anti-retour, avantageusement disposé entre le réservoir 2 et la source de liquide, ce qui présente l'avantage de limiter les déperditions de chaleur vers la source de liquide et de limiter le chauffage au liquide présent dans le réservoir 2.

De préférence, le réservoir 2 comprend en outre des moyens de compensation de la dilatation du liquide, comprenant par exemple un groupe de sécurité ou un système déformable sous la pression comprenant par exemple un réservoir hydraulique à membrane.

De préférence, le réservoir 2 comprend en outre des moyens de détartrage du liquide.

Quelque soit le mode de réalisation du dispositif 1 de génération de vapeur selon l'invention, le liquide se trouve dans le réservoir 2 à une température supérieure à la température à laquelle se trouve le réservoir 2, ou le dispositif de génération de vapeur 1, ou l'appareil comprenant ledit dispositif de génération de vapeur 1, de préférence supérieure à la température ambiante, avantageusement à une température inférieure à la température d'ébullition ou de vaporisation du liquide.

A ses fins, le dispositif de génération de vapeur 1 comprend des moyens de chauffage du liquide présent dans le réservoir 2. Ces moyens de chauffage peuvent être disposés dans le réservoir 2, ou à l'extérieur du réservoir 2.

Le préchauffage, dans le réservoir 2, du liquide à vaporiser, avant son arrivée dans l'enceinte 3 de vaporisation, présente l'avantage de permettre la diminution des températures de chauffe des moyens de vaporisation du liquide dans l'enceinte 3. Cela permet une économie d'énergie importante. Malgré le fait qu'il faille chauffer le liquide dans le réservoir 2 en plus de la production de vapeur dans l'enceinte 3, la réduction de la température de régulation de l'enceinte 3 permet un gain d'énergie significatif. Pour le dispositif 1 de génération de vapeur, l'économie d'énergie réalisée est d'environ 37% en comparaison avec un dispositif classique, et d'environ 6% pour le four comprenant le dispositif 1 selon l'invention en comparaison avec un four classique.

Dans le mode de réalisation dans lequel le liquide est de l'eau, et si l'on considère que le dispositif 1 de génération de vapeur se trouve au niveau de la mer et que le réservoir 2 est sous pression atmosphérique, l'eau est chauffée dans le réservoir 2 à une température comprise entre environ 40 °C et environ 95 °C.

Le liquide préchauffé dans le réservoir 2 est amené par des moyens contrôlés d'acheminement du liquide du réservoir 2 vers l'enceinte 3. De préférence, ces moyens d'acheminement sont isolés thermiquement ou sont thermostatés. De préférence, ils comprennent un ou plusieurs dispositifs ou ensembles d'injection, qui comprend, ou comprennent, au moins un dispositif 5 de transfert du liquide du réservoir 2 vers l'enceinte 3, au moins une conduite 6 de sortie du liquide du réservoir 2 et au moins une conduite 7 d'entrée du liquide dans l'enceinte 3.

De préférence, le dispositif 5 de transfert du liquide du réservoir 2 dans l'enceinte 3 permet le transfert contrôlé du liquide, selon différents paramètres modifiables ou réglables, de préférence en fonction du type de produit ou aliments à cuire et/ou du type de cuisson et/ou d'un ou plusieurs cycles de cuisson. Cela présente l'avantage d'amener une quantité de liquide déterminée dans l'enceinte 3 pour la génération d'une quantité définie de vapeur de liquide. Avantageusement cet acheminement contrôlé du liquide se fait par des moyens de control, de façon automatique ou pilotée par l'utilisateur du dispositif de génération de vapeur 1 ou du four comprenant le dispositif 1 de génération de vapeur, des moyens qui coopèrent avec, comprennent, ou sont, des moyens de détermination de la quantité de vapeur à produire. De préférence, ce transfert automatique ou piloté se fait via des moyens de programmation du dispositif de génération de vapeur 1 ou du four comprenant ledit dispositif 1 comprenant une interface utilisateur, comme par exemple un régulateur ou un écran tactile. Avantageusement ces moyens de programmation interagissent avec, comprennent ou sont, les moyens de programmation de l'acheminement du liquide de la source de liquide dans le réservoir 2.

Les moyens de contrôle des moyens d'acheminement du liquide dans l'enceinte 3 et les moyens de détermination de la quantité de vapeur à produire peuvent être compris dans le dispositif 1 de génération de vapeur et/ou l'appareil, par exemple le four, comprenant ledit dispositif 1.

Le transfert de liquide du réservoir 2 dans l'enceinte 3 peut se faire en une seule fois ou en plusieurs fois, espacées par des laps de temps programmables et variables, par exemple une centaine de millilitres durant quelques secondes. Le transfert séquentiel de liquide présente l'avantage de réduire les chocs thermiques.

De préférence, le dispositif 5 de transfert est une pompe ou une valve. Avantageusement, il s'agit d'une vanne, encore plus avantageusement il s'agit d'une électrovanne, de préférence pilotée.

L'enceinte 3, en particulier en fonctionnement, est sous pression atmosphérique, ou sensiblement sous pression atmosphérique, à savoir sous une pression d'environ 101 KPa. Cela présente l'avantage de nécessiter moins d'énergie pour générer de la vapeur de liquide, en comparaison avec une enceinte qui serait sous pression de liquide. Par ailleurs, la pression de vapeur permet à cette dernière d'être acheminée vers son lieu d'utilisation sans l'utilisation de moyens énergivores, tels des pompes.

L'enceinte 3 a toute forme adéquate et elle est faite de tous matériaux, ou assemblage(s) de matériaux, adéquats. Elle est destinée, et apte, à recevoir le liquide à vaporiser et comprend, ou est en communication avec, tous moyens adéquats d'acheminement du liquide dans l'enceinte 3, par exemple une ou plusieurs ouvertures et une ou plusieurs conduites ou canalisations 7. En outre, elle comprend, ou est en communication avec, des moyens de distribution de la vapeur générée, pour son acheminement vers son lieu d'utilisation, par exemple vers l'enceinte de cuisson d'un four, ces moyens de distribution de la vapeur générée comprenant une ou plusieurs ouvertures et une ou plusieurs conduites ou canalisations 8.

En fonctionnement, l'enceinte 3 n'est pas destinée à stocker, et ne stocke pas de liquide (figures 2 à 4). En fonctionnement, elle comprend principalement, ou majoritairement, de la vapeur de liquide et ne comprend pas de liquide, hormis, transitoirement, le temps de la vaporisation, la quantité nécessaire pour générer la quantité déterminée de vapeur à injecter, sans pour autant exclure d'éventuelles traces, ou faibles quantité de liquides, résultant des vaporisations précédentes et qui pourraient éventuellement se condenser sur les parois de l'enceinte 3, mais en tout état de cause l'enceinte 3 ne constitue pas une réserve de liquide à vaporiser. Cela présente l'avantage d'économiser de l'énergie car il n'y a pas besoin de maintenir une quantité importante de liquide dans l'enceinte 3 à une température proche de la température d'ébullition du liquide pour être prête à la vaporisation. De préférence, et afin de limiter la quantité de liquide résiduel dans l'enceinte 3, cette dernière peut comprendre des moyens d'évacuation du liquide non vaporisé, ce qui présente l'avantage d'optimiser l'économie d'énergie ainsi réalisée.

La vapeur de liquide dans l'enceinte 3 est générée, de préférence instantanément ou quasi instantanément, à l'aide de moyens 9 de vaporisation du liquide aptes à vaporiser, instantanément ou quasi instantanément, le liquide amené dans l'enceinte 3. De préférence, il s'agit de moyens du type « sauna », qui, en fonctionnement, sont chauds et lorsqu'ils reçoivent le liquide, le vaporise extrêmement rapidement dès qu'il entre contact avec eux. De tels moyens présentent l'avantage de pouvoir générer de façon contrôlée une quantité importante de vapeur de liquide dans un lapse de temps court et de façon répétitive, tout en étant économe en énergie. Ainsi, il est possible de générer, et de distribuer, 60 à 120 mL de vapeur de liquide par kilogramme de produit à cuir, soit environ 500 à 1400 mL, et ce, en quelque secondes, en particulier en moins de cinq secondes.

Les moyens 9 de vaporisation du liquide peuvent être disposés dans, ou à l'extérieur de, l'enceinte 3.

La vapeur de liquide dans l'enceinte 3 est générée, de préférence, à partir du liquide introduit dans l'enceinte 3 à une température supérieure à la température à laquelle se trouve le dispositif de génération de vapeur 1 ou l'appareil comprenant ledit dispositif de génération de vapeur 1, de préférence supérieure à la température ambiante, avantageusement à une température inférieure à la température d'ébullition ou de vaporisation du liquide, ce qui présente l'avantage de maximiser le gain énergétique de génération de vapeur.

Dans le mode de réalisation dans lequel le liquide est de l'eau, et si l'on considère que le dispositif 1 de génération de vapeur se trouve au niveau de la mer et que le réservoir 2 est sous pression atmosphérique, l'eau est chauffée à une température comprise entre environ 180 et environ 400 °C.

Les moyens de distribution de la vapeur produite dans l'enceinte 3 comprennent au moins une conduite 8 d'acheminement de ladite vapeur vers au moins un appareil auquel le dispositif 1 de génération de vapeur est couplé et/ou intégré, par exemple vers la cavité de cuisson d'un four.

L'utilisation du réservoir 2, distinct de l'enceinte 3, présente l'avantage, pour un volume de vapeur donné, de pouvoir réduire les dimensions et le poids de l'enceinte 3 de génération de vapeur par rapport aux dispositifs connus, ce qui lui permet d'avoir un encombrement réduit, et ainsi, de pouvoir être disposée astucieusement et aisément à proximité, ou dans le bâti, du four destiné à le recevoir. Par ailleurs, cet encombrement réduit permet également une économie d'énergie de par la réduction de la quantité d'énergie nécessaire pour chauffer un volume réduit et une masse réduite pour ce qui concerne l'enceinte 3.

De plus, l'utilisation du réservoir 2 et des moyens contrôlés d'acheminement du liquide du réservoir 2 vers l'enceinte 3 permettent de contrôler la quantité, et de préférence également le moment de la génération de vapeur, en contrôlant la quantité de liquide juste nécessaire pour générer la quantité de vapeur nécessaire, selon les étapes du cycle de cuisson et/ou en fonction du produit à cuir.

Les moyens de chauffage du liquide dans le réservoir 2 et/ou les moyens 9 de vaporisation du liquide dans l'enceinte 3 et/ou les moyens pour thermostater l'acheminement du liquide dans l'enceinte 3 et/ou éventuellement pour l'acheminement du liquide dans le réservoir 2, comprennent et/ou mettent en oeuvre des moyens de combustion d'un gaz ou d'un combustible liquide, une ou plusieurs résistances électriques, ou le rayonnement solaire. De préférence, ces moyens sont les moyens de chauffage de l'appareil auquel le dispositif 1 de génération de vapeur est couplé ou permettent l'utilisation de la chaleur de l'appareil auquel le dispositif 1 de génération de vapeur est couplé. De préférence, ces moyens comprennent et/ou mettent en oeuvre des moyens de cogénération de chaleur à partir de la chaleur du ou des appareils au(x)quel(s) le dispositif 1 de génération de vapeur est couplé. Avantageusement, ces moyens comprennent un échangeur de chaleur.

Le dispositif 1 de génération de vapeur est apte à être couplé à, ou fait partie d'un ou plusieurs appareils, ou ensembles, aptes à utiliser de la vapeur d'un liquide pour, ou en complément du traitement thermique d'un ou plusieurs produits ou objets. De préférence, il s'agit d'un ou plusieurs fours de cuisson, fours traditionnels, professionnels ou domestiques, de préférence pour la cuisson de produits alimentaires, en particulier du pain, ou des fours de cuisson à la vapeur.

De préférence, le ou les appareils comprenant le dispositif 1 de génération de vapeur selon l'invention comprend ou comprennent tous moyens adéquats pour chauffer la cavité de cuisson que le ou les compose. De préférence, il comprend, ou ils comprennent, également des moyens de brassage de l'atmosphère intérieure de la cavité de cuisson, par exemple une turbine ou un ventilateur, et, éventuellement, des moyens d'évacuation de la chaleur et/ou de la vapeur présente dans ladite cavité de cuisson à déclanchement manuel ou automatique.

De préférence, le ou les appareils comprenant le dispositif 1 selon l'invention, par exemple le ou les fours de cuisson, comprend ou comprennent en outre des moyens de contrôle et/ou des moyens de commande et/ou des moyens de programmation du traitement thermique des produits à traiter, par exemple de la cuisson d'aliments. Avantageusement, ces moyens sont couplés et/ou interagissent et/ou contrôlent les moyens d'acheminement contrôlé du liquide du réservoir 2 dans l'enceinte 3 et/ou les moyens d'acheminement du liquide d'une source de liquide dans le réservoir 2, les moyens de contrôle desdits moyens d'acheminement, de préférence également les moyens de chauffage du liquide dans le réservoir 2 et/ou les moyens 9 de vaporisation du liquide dans l'enceinte 3 et/ou les moyens pour thermostater l'acheminement du liquide dans l'enceinte 3 et/ou éventuellement pour l'acheminement du liquide dans le réservoir 2.

De préférence, le ou les appareils comprenant le dispositif 1 selon l'invention comprennent les moyens de control des moyens d'acheminement du liquide dans l'enceinte 3 et les moyens de détermination de la quantité de vapeur à produire.

De préférence, le ou les appareils comprenant le dispositif 1 selon l'invention, peuvent fonctionner selon des modes de fonctionnement différents, comme par exemple un mode dit « économique » dans lequel l'économie d'énergie est privilégiée, ou selon un mode dit « optimal » dans lequel le fonctionnement optimal du four et du dispositif 1 générateur de vapeur est privilégié, ou un mode dite « équilibré » dans lequel le fonctionnement optimal du four et du dispositif 1 générateur de vapeur se fait tout en étant économe en énergie.

De préférence, la méthode de génération de vapeur d'un liquide selon l'invention met en oeuvre le dispositif 1 de génération de vapeur selon l'invention.

La méthode comprend une première étape d'acheminement d'un liquide à partir d'une source de liquide dans un réservoir 2, qui est, en particulier en fonctionnement, sous pression atmosphérique, ou sensiblement sous pression atmosphérique, ou sous pression de liquide, avec éventuellement une étape préalable de filtration du liquide avant son acheminement dans le réservoir 2.

De préférence, cet acheminement est contrôlé. Il se fait en fonction de la quantité de vapeur de liquide à générer. De préférence, la quantité de liquide amené dans le réservoir 2 est telle qu'elle permette la génération de la quantité de vapeur nécessaire au(x) appareil(s) au(x)quel(s) le dispositif 1 de génération de vapeur est couplé. Avantageusement, la quantité de liquide amené dans le réservoir 2 est fonction du produit à traiter thermiquement, par exemple de l'aliment à cuire, et/ou du cycle ou programme de traitement thermique et/ou de la phase du cycle ou programme de traitement thermique.

De préférence, le liquide acheminé dans le réservoir 2, l'est à une température supérieure à la température à laquelle se trouve le réservoir 2, de préférence supérieure à la température ambiante, ou à la température à laquelle le liquide est chauffé, ou maintenu, dans le réservoir 2. Dans ce mode de réalisation, l'acheminement du liquide dans le réservoir 2 se fait de préférence de manière isolée thermiquement ou de façon thermostatée.

La méthode selon l'invention comprend en outre une étape de chauffage et/ou de maintien du liquide dans le réservoir 2 à une température supérieure à la température ambiante à laquelle se trouve le réservoir 2, ou le dispositif de génération de vapeur 1, ou l'appareil comprenant ledit dispositif de génération de vapeur 1, et avantageusement à une température inférieure à la température d'ébullition ou de vaporisation du liquide.

Le liquide, éventuellement préalablement chauffé, est ensuite transféré, de préférence de manière isolée thermiquement ou de façon thermostatée, du réservoir 2 dans l'enceinte 3, qui en fonctionnement, est sous pression atmosphérique, ou sensiblement sous pression atmosphérique et ne contient pas préalablement de liquide. De préférence, ce transfert est contrôlé. Il se fait en fonction de la quantité de vapeur de liquide à générer, préalablement déterminée. De préférence, la quantité de liquide amené dans l'enceinte 3 est telle qu'elle permette la génération de la quantité de vapeur nécessaire au(x) appareil(s) au(x)quel(s) le dispositif 1 de génération de vapeur est couplé. Avantageusement, la quantité de liquide amené dans l'enceinte 3 est fonction du produit à traiter thermiquement, par exemple de l'aliment à cuire, et/ou du cycle ou programme de traitement thermique et/ou de la phase du cycle ou programme de traitement thermique.

Le liquide, est vaporisé, instantanément ou quasi instantanément, sous pression atmosphérique ou sensiblement atmosphérique, par le contact du liquide sur les moyens 9 de vaporisation.

La vapeur est ensuite acheminée, de préférence instantanément ou quasi instantanément après sa génération, vers au moins un appareil auquel le dispositif 1 de génération de vapeur est couplé et/ou intégré.

Dans la méthode selon l'invention, le chauffage du liquide dans le réservoir 2 et/ou la vaporisation du liquide dans l'enceinte 3 et/ou le chauffage des moyens d'acheminement du liquide dans l'enceinte 3 et/ou éventuellement pour l'acheminement du liquide dans le réservoir 2, est ou sont réalisés par la combustion d'un gaz ou d'un combustible liquide, par une ou plusieurs résistances électriques, ou par le rayonnement solaire. De préférence, ce chauffage utilise la chaleur produite et/ou utilisée par le ou les appareils au(x)quel(s) le dispositif 1 de génération de vapeur est couplé.

La méthode selon l'invention est de préférence mise en oeuvre dans une méthode traitement thermique d'un ou plusieurs produits, de préférence une méthode de cuisson de produits alimentaires, en particulier du pain, mettant en ouvre un ou plusieurs fours traditionnels, professionnels ou domestiques, ou des fours de cuisson à la vapeur.

De préférence, la méthode de traitement thermique, par exemple de cuisson de produits alimentaires, comprend une étape de contrôle et/ou de commande du traitement thermique des produits à traiter.

De préférence, la méthode comprend une étape de contrôle et/ou d'interaction de l'acheminement du liquide dans le réservoir 2 et/ou de l'acheminement du liquide du réservoir 2 dans l'enceinte 3 et/ou du chauffage du liquide dans le réservoir 2 et/ou de la vaporisation du liquide dans l'enceinte 3 et/ou du chauffage du liquide durant son acheminement dans l'enceinte 3 et/ou éventuellement durant son acheminement dans le réservoir 2, par et/ou avec le contrôle et/ou la commande du traitement thermique des produits à traiter thermiquement, en particulier à cuire.

De préférence, la méthode comprend une étape de détermination du produit à cuire et/ou du cycle ou programme de cuisson, cette détermination avantageusement interagissant avec et/ou contrôlant le traitement thermique des produits à traiter et/ou l'acheminement du liquide vers le réservoir 2 et/ou de l'acheminement du liquide du réservoir 2 vers l'enceinte 3 et/ou le chauffage du liquide dans le réservoir 2 et/ou la vaporisation du liquide dans l'enceinte 3 et/ou le chauffage du liquide durant son acheminement dans l'enceinte 3 et/ou éventuellement durant son acheminement dans le réservoir 2. Avantageusement, cette détermination permet l'évaluation de la quantité de vapeur de liquide à générer dans l'enceinte 3 et la quantité de liquide à chauffer dans le réservoir 2.

## Revendications

1. Four comprenant au moins un dispositif (1) de génération de vapeur d'un liquide, ledit dispositif (1) comprenant :
- un réservoir (2) apte à recevoir un liquide à vaporiser, en communication de fluide avec une source dudit liquide, ledit réservoir (2) se trouvant sous pression atmosphérique ou sous pression de liquide et demeurant à température ambiante,
- des moyens de chauffage dudit liquide dans ledit réservoir (2) pour amener et/ou maintenir ledit liquide à une température supérieure à la température ambiante à laquelle demeure ledit réservoir (2) et inférieure à la température de vaporisation dudit liquide,
- des moyens contrôlés d'acheminement dudit liquide chaud dudit réservoir (2) dans une enceinte (3), lesdits moyens contrôlés d'acheminement ne délivrant que la quantité nécessaire dudit liquide à la génération d'une quantité déterminée de vapeur de liquide,
- des moyens de contrôle desdits moyens d'acheminement contrôlant l'acheminement de ladite quantité nécessaire dudit liquide,
- une enceinte (3) de vaporisation en communication de fluide avec ledit réservoir (2) et se trouvant sous pression atmosphérique, qui, en fonctionnement, ne contient transitoirement que ladite quantité nécessaire dudit liquide
- des moyens (9) de vaporisation de ladite quantité nécessaire dudit liquide dans ladite enceinte (3) de vaporisation, générant instantanément ladite quantité déterminée de vapeur dudit liquide,
- des moyens de distribution, à partir de ladite enceinte (3), de ladite quantité déterminée de vapeur générée.

2. Le four selon la revendication précédente, dans lequel les moyens contrôlés d'acheminement du liquide du réservoir (2) dans l'enceinte (3) du dispositif (1) de génération de vapeur comprennent au moins un dispositif de transfert (5) qui est une électrovanne pilotée.

3. Le four selon l'une quelconque des revendications précédentes, dans lequel le dispositif (1) comprend en outre des moyens de contrôle des moyens de chauffage du liquide dans le réservoir (2) et/ou des moyens (9) de vaporisation du liquide dans ladite enceinte (3) et/ou des moyens de distribution de ladite vapeur générée.

4. Le four selon l'une quelconque des revendications précédentes, dans lequel le dispositif (1) comprend en outre des moyens contrôlés d'acheminement du liquide de la source de liquide dans le réservoir (2) pour un transfert contrôlé dudit liquide dans ledit réservoir (2).

5. Le four selon l'une quelconque des revendications précédentes, dans lequel le liquide est de l'eau.

6. Le four selon l'une quelconque des revendications précédentes comprenant des moyens de contrôle et/ou de commande et/ou de programmation de la cuisson des produits à cuire couplés et/ou interagissant et/ou contrôlant les moyens contrôlés d'acheminement du liquide du réservoir (2) vers l'enceinte (3) et/ou les moyens de chauffage du liquide dans le réservoir (2) et/ou les moyens (9) de vaporisation du liquide dans l'enceinte (3) et/ou éventuellement les moyens d'acheminement du liquide depuis la source de liquide vers le réservoir (2).

7. Four de cuisson selon l'une quelconque des revendications précédentes, étant un four de boulangerie.

8. Méthode de cuisson d'au moins un produit alimentaire dans un four de cuisson comprenant une cavité de cuisson, ladite méthode comprenant les étapes suivantes :
- déterminer une quantité de vapeur d'un liquide à générer dans ladite cavité de cuisson dudit four,
- amener ledit liquide à partir d'une source dudit liquide dans un réservoir (2) d'un dispositif (1) de génération de vapeur de liquide, ledit réservoir (2) se trouvant, en fonctionnement, sous pression atmosphérique ou sous pression de liquide et demeurant à température ambiante,
- chauffer et/ou maintenir ledit liquide dans ledit réservoir (2) à une température supérieure à la température ambiante à laquelle demeure ledit réservoir (2) et inférieure à la température de vaporisation dudit liquide,
- amener, de façon contrôlée, une quantité, dudit liquide chaud, nécessaire à la génération d'une quantité déterminée de vapeur dudit liquide, dudit réservoir (2) dans une enceinte (3) de vaporisation dudit dispositif (1) de génération de vapeur, ladite enceinte (3) étant, en fonctionnement, sous pression atmosphérique et ne contenant pas préalablement de liquide,
- générer instantanément, sous pression atmosphérique, dans ladite enceinte (3) ladite quantité déterminée de vapeur à partir de ladite quantité nécessaire dudit liquide,
- distribuer ladite quantité déterminée de vapeur dudit liquide générée à ladite cavité de cuisson lors de la cuisson dudit au moins un produit alimentaire.

9. La méthode selon la revendication 8 comprenant une étape de chauffage du liquide avant son acheminement dans le réservoir (2) à une température supérieure à la température ambiante à laquelle demeure ledit réservoir (2).

10. La méthode selon l'une quelconque des revendications 8 ou 9, dans laquelle l'étape de détermination de la quantité de vapeur de liquide à générer est fonction de la nature du produit à traiter thermiquement dans le four auquel le dispositif (1) de génération de vapeur est couplé.

11. Méthode de cuisson selon l'une quelconque des revendications 8 à 10 comprenant en outre une étape de détermination de la nature du produit alimentaire à cuire et/ou du cycle ou programme de cuisson.

12. Méthode de cuisson selon la revendication 11 comprenant une étape de contrôle et/ou de commande et/ou d'interaction, en fonction de la détermination de la nature du produit alimentaire à cuir et/ou du cycle ou programme de cuisson, de l'acheminement du liquide vers le réservoir (2) et/ou de l'acheminement du liquide du réservoir (2) dans l'enceinte (3) et/ou du chauffage du liquide dans le réservoir (2) et/ou de la vaporisation du liquide dans l'enceinte (3) et/ou du chauffage du liquide durant son acheminement dans l'enceinte (3) et/ou éventuellement durant son acheminement dans le réservoir (2).

## Patentansprüche

1. Ofen, umfassend mindestens eine Vorrichtung (1) zum Erzeugen von Dampf aus einer Flüssigkeit, wobei die Vorrichtung (1) Folgendes umfasst:
- einen Behälter (2), der ausgelegt ist, um eine Flüssigkeit aufzunehmen, die verdampft werden soll, der in fluidischer Kommunikation mit einer Quelle der Flüssigkeit ist, wobei der Behälter (2) unter atmosphärischem Druck oder unter Flüssigkeitsdruck steht und auf Umgebungstemperatur bleibt,
- Mittel zum Erhitzen der Flüssigkeit in dem Behälter (2), um die Flüssigkeit auf eine Temperatur zu bringen und/oder bei dieser zu halten, die höher als die Umgebungsgtemperatur ist, bei der der Behälter (2) bleibt, und niedriger als die Verdampfungstemperatur der Flüssigkeit,
- Kontrollmittel, um die erhitzte Flüssigkeit vom Behälter (2) in ein Gefäß (3) zu führen, wobei die Kontrollmittel zur Führung nur die erforderliche Menge der Flüssigkeit zur Erzeugung einer bestimmten Menge Flüssigkeitsdampfes abgibt,
- Kontrollmittel der Führungsmittel, die die Führung der erforderlichen Menge der Flüssigkeit kontrollieren,
- ein Verdampfungsgefäß (3) in fluidischer Kommunikation mit dem Behälter (2), und das unter atmosphärischem Druck steht, das, im Betrieb, vorübergehend nur die erforderliche Menge der Flüssigkeit enthält,
- Mittel (9) zum Verdampfen der erforderlichen Menge der Flüssigkeit in dem Verdampfungsgefäß (3), die unmittelbar die bestimmte Menge Dampf der Flüssigkeit erzeugen,
- Mittel zum Verteilen, ausgehend von dem Gefäß (3), der bestimmten erzeugten Menge Dampf.

2. Ofen nach dem vorhergehenden Anspruch, wobei die Kontrollmittel zur Führung der Flüssigkeit des Behälters (2) in das Gefäß (3) der Vorrichtung (1) zur Erzeugung von Dampf mindestens eine Übertragungsvorrichtung (5) umfassen, wobei es sich um ein gesteuertes Elektroventil handelt.

3. Ofen nach einem der vorhergehenden Ansprüche, wobei die Vorrichtung (1) außer den Kontrollmitteln Mittel zum Erhitzen der Flüssigkeit im Behälter (2) und/oder Mittel (9) zur Verdampfung der Flüssigkeit in dem Gefäß (3) und/oder Mittel zur Verteilung des erzeugten Dampfes umfasst.

4. Ofen nach einem der vorhergehenden Ansprüche, wobei die Vorrichtung (1) außerdem Kontrollmittel zum Führen der Flüssigkeit von der Quelle von Flüssigkeit in den Behälter (2) für eine kontrollierte Übertragung der Flüssigkeit in den Behälter (2) umfasst.

5. Ofen nach einem der vorhergehenden Ansprüche, wobei die Flüssigkeit Wasser ist.

6. Ofen nach einem der vorhergehenden Ansprüche, umfassend Mittel zum Kontrollieren und/oder Steuern und/oder Programmieren des Garens der Produkte, die gegart werden sollen, die gekoppelt sind und/oder interagieren und/oder die Kontrollmittel zur Führung der Flüssigkeit des Behälters (2) hin zum Gefäß (3) und/oder den Mitteln zum Erhitzen der Flüssigkeit im Behälter (2) und/oder den Mitteln (9) zur Verdampfung der Flüssigkeit im Behälter (3) und/oder eventuell den Mitteln zum Führen der Flüssigkeit von der Quelle der Flüssigkeit hin zum Behälter (2) umfassen.

7. Garofen nach einem der vorhergehenden Ansprüche, wobei es sich um einen Bäckerofen handelt.

8. Verfahren zum Garen mindestens eines Lebensmittelprodukts in einem Garofen, umfassend einen Garhohlraum, wobei das Verfahren die folgenden Schritte umfasst:
- Bestimmen einer Menge Dampf einer Flüssigkeit die im Garhohlraum des Ofens erzeugt werden soll,
- Bringen der Flüssigkeit ausgehend von einer Quelle der Flüssigkeit in einen Behälter (2) einer Vorrichtung (1) zum Erzeugen von Flüssigkeitsdampf, wobei der Behälter (2) im Betrieb unter atmosphärischem Druck oder unter Flüssigkeitsdruck steht und auf Umgebungstemperatur bleibt,
- Erhitzen und/oder Halten der Flüssigkeit in dem Behälter (2) bei einer Temperatur, die höher als die Umgebungsgtemperatur ist, bei der der Behälter (2) bleibt, und niedriger als die Verdampfungstemperatur der Flüssigkeit,
- Bringen, auf kontrollierte Weise, eine Menge der erhitzten Flüssigkeit, die zur Erzeugung einer bestimmten Menge Flüssigkeitsdampfes erforderlich ist, vom Behälter (2) in ein Gefäß (3) zur Verdampfung der Vorrichtung (1) zur Erzeugung von Dampf, wobei das Gefäß (3) in Betrieb unter atmosphärischem Druck ist und im Voraus keine Flüssigkeit enthält,
- unmittelbares Erzeugen, unter atmosphärischem Druck, in dem Gefäß (3), die bestimmte Menge Dampf ausgehend von der erforderlichen Menge der Flüssigkeit,
- Verteilen der bestimmten Menge Dampf aus der erzeugten Flüssigkeit in den Garhohlraum beim Garen des mindestens einen Lebensmittelprodukts.

9. Verfahren nach Anspruch 8, umfassend einen Schritt des Erhitzens der Flüssigkeit vor seinem Führen in den Behälter (2) auf eine Temperatur, die höher als die Umgebungstemperatur ist, bei der der Behälter (2) bleibt.

10. Verfahren nach einem der Ansprüche 8 oder 9, wobei der Schritt des Bestimmens der Menge Flüssigkeitsdampf, die erzeugt werden soll, eine Funktion der Art des Produkts ist, das thermisch im Ofen behandelt werden soll, mit dem die Vorrichtung (1) zur Erzeugung von Dampf gekoppelt ist.

11. Verfahren zum Garen nach einem der Ansprüche 8 bis 10, umfassend außerdem einen Schritt des Bestimmens der Art des Lebensmittelprodukts, das gegart werden soll, und/oder des Garzyklus oder -programms.

12. Verfahren nach Anspruch 11, umfassend einen Schritt des Kontrollierens und/oder Steuerns und/oder der Interagierens je nach der Bestimmung der Art des Lebensmittelprodukts, das gegart werden soll, und/oder des Garzyklus oder -programms, das Führen der Flüssigkeit hin zum Behälter (2) und/oder des Führens der Flüssigkeit des Behälters (2) in das Gefäß (3) und/oder des Erhitzens der Flüssigkeit im Behälter (2) und/oder des Verdampfens der Flüssigkeit im Gefäß (3) und/oder des Erhitzens der Flüssigkeit während ihres Führens in das Gefäß (3) und/oder eventuell während ihres Führens in den Behälter (2).

## Claims

1. An oven comprising at least one device (1) for generating vapor from a liquid, said device (1) comprising:
- a reservoir (2) able to receive a liquid to be vaporized, in fluid communication with a source of said liquid, said reservoir (2) being at atmospheric pressure or at liquid pressure and remaining at ambient temperature,
- means for heating said liquid in said reservoir (2) to bring and/or keep said liquid at a temperature above ambient temperature at which said reservoir (2) remains and below the vaporization temperature of said liquid,
- controlled means for conveying said hot liquid from said reservoir (2) into a chamber (3), said controlled conveying means delivering only the quantity of said liquid necessary to generate a determined quantity of liquid vapor,
- control means of said conveying means controlling the conveying of said necessary quantity of said liquid,
- a vaporization chamber (3) in fluid communication with said reservoir (2) and at atmospheric pressure, which, during operation, only temporarily contains said necessary quantity of said liquid,
- means (9) for vaporizing said necessary quantity of said liquid in said vaporization chamber (3), instantaneously generating said determined quantity of vapor from said liquid,
- means for distributing, from said chamber (3), said generated determined quantity of vapor.

2. The oven according to the preceding claim, wherein the controlled means for conveying liquid from the reservoir (2) into the chamber (3) of the vapor generating device (1) comprises at least one transfer device (5) that is a controlled solenoid valve.

3. The oven according to any one of the preceding claims, wherein the device (1) further comprises control means of the means for heating liquid in the reservoir (2) and/or means (9) for vaporizing liquid in said chamber (3) and/or means for distributing said generated vapor.

4. The oven according to any one of the preceding claims, wherein the device (1) further comprises controlled means for conveying liquid from the liquid source in the reservoir (2) for a controlled transfer of said liquid into said reservoir (2).

5. The oven according to any one of the preceding claims, wherein the liquid is water.

6. The oven according to any one of the preceding claims, comprising control and/or command and/or programming means for the cooking of the products to be cooked, coupled and/or interacting with and/or controlling the controlled means for conveying liquid from the reservoir (2) to the chamber (3) and/or the means for heating the liquid in the reservoir (2) and/or the means (9) for vaporizing the liquid in the chamber (3) and/or optionally the means for conveying liquid from the liquid source to the reservoir (2).

7. The cooking oven according to any one of the preceding claims, which is a bakery oven.

8. A method for cooking at least one food product in a cooking oven comprising a cooking cavity, said method comprising the following steps:
- determining a quantity of vapor of a liquid to be generated in said cooking cavity of said oven,
- bringing said liquid from a source of said liquid into a reservoir (2) of a liquid vapor generating device (1), said reservoir (2) being, during operation, at atmospheric pressure or at liquid pressure and remaining at ambient temperature,
- heating and/or keeping said liquid in said reservoir (2) at a temperature above ambient temperature at which said reservoir (2) remains and below the vaporization temperature of said liquid,
- bringing, in a controlled manner, a quantity of said hot liquid, necessary for generating a determined quantity of vapor from said liquid, from said reservoir (2) into a vaporization chamber (3) of said vapor generating device (1), said chamber (3) being, during operation, at atmospheric pressure and not containing liquid beforehand,
- instantaneously generating, at atmospheric pressure, in said chamber (3), said determined quantity of vapor from said necessary quantity of said liquid,
- distributing said determined quantity of vapor from said generated liquid to said cooking cavity during the cooking of said at least one food product.

9. The method according to claim 8, comprising a step for heating the liquid before it is conveyed into the reservoir (2) at a temperature above the ambient temperature at which said reservoir (2) remains.

10. The method according to any one of claims 8 or 9, wherein the step for determining the quantity of liquid vapor to be generated depends on the nature of the product to be thermally treated in the oven with which the vapor generating device (1) is coupled.

11. The cooking method according to any one of claims 8 to 10, further comprising a step for determining the nature of the food product to be cooked and/or the cooking cycle or program.

12. The cooking method according to claim 11, comprising a control and/or command and/or interaction step, based on the determination of the nature of the food product to be cooked and/or the cooking cycle or program, for the conveying of the liquid to the reservoir (2) and/or the conveying of the liquid from the reservoir (2) into the chamber (3) and/or the heating of the liquid in the reservoir (2) and/or the vaporization of the liquid in the chamber (3) and/or the heating of the liquid during its conveying into the chamber (3) and/or optionally during its conveying into the reservoir (2).
